# EUROPEAN PATENT APPLICATION

(11) **EP 4 742 401 A1**
(43) Date of publication of application: **13.05.2026**
(21) Application number: 25213669.2
(22) Date of filing: 05.11.2025
(51) Int. Cl.: H01M 50/342, H01M 50/333, H01M 50/186, H01M 50/147, H01M 50/193

(54) **SECONDARY BATTERY**

(30) Priority: 07.11.2024 KR 20240156931
(71) Applicant: Samsung SDI Co., Ltd., Yongin-si, Gyeonggi-do 17084 (KR)
(72) Inventor: YOO, SangHoon, Yongin-Si, Gyeonggi-do 17084 (KR)
(74) Representative: Gulde & Partner

(57) **Abstract**

A secondary battery includes an electrode assembly, a case accommodating the electrode assembly, the case having one open side, a cap plate coupled with the one open side, the cap plate having a vent hole, an insulating frame coupled with the cap plate, the insulating frame being between the cap plate and the electrode assembly, and a vent part coupled with the insulating frame, the vent part sealing the vent hole. The vent part comprises an elastic member coupled with the insulating frame and a gasket coupled with the elastic member.

## Description

### BACKGROUND

### 1. Field

The present disclosure relates to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A lithium-ion secondary battery as a type of a secondary battery has been widely used. When the lithium-ion secondary battery is exposed to a high temperature environment for a long time or is continuously charged or discharged with high current, internal gas may be generated due to deterioration of a cell and the like. When internal pressure of a case is increased due to the internal gas, fire or explosion may occur.

### SUMMARY

The invention is defined by the appended claims. The description that follows is subjected to this limitation. Any disclosure lying outside the scope of said claims is only intended for illustrative as well as comparative purposes.

Embodiments include a secondary battery, including an electrode assembly, a case accommodating the electrode assembly, the case having an open side, a cap plate coupled with the open side, the cap plate having a vent hole, an insulating frame coupled with the cap plate, the insulating frame being between the cap plate and the electrode assembly, and a vent part (directly) coupled with the insulating frame, the vent part sealing the vent hole.

The vent part includes an elastic member coupled with the insulating frame and a gasket (directly) coupled with the elastic member, The vent part may further include a plug disposed (directly) on the gasket.

The elastic member may be a spring coil.

The elastic member may be (directly) coupled to the insulating frame by welding.

The gasket may include a first surface in contact with the plug, and a second surface in contact with the elastic member, wherein an area of the first surface may be larger than an area of the second surface.

The elastic member and/or the plug may each include or be formed of a corrosion-resistant material.

The corrosion-resistant material may be at least one of aluminum, an aluminum alloy, and stainless use steel.

The gasket may include a material having an elastic force. The gasket may be formed of an elastomer.

The material having the elastic force, respectively the elastomer may be a silicon rubber.

The vent hole may have a circular shape.

Embodiments include a secondary battery, including an electrode assembly, a case accommodating the electrode assembly, the case having an open side, a cap plate (directly) coupled with the open side of the case, the cap plate including a vent hole, an insulating frame (directly) coupled with the cap plate, the insulating frame being between the cap plate and the electrode assembly, and a vent part sealing the vent hole, wherein the vent part includes an elastic member (directly)coupled with the insulating frame, a gasket (directly)coupled with the elastic member, a protrusion portion protruding on the gasket, and a plug disposed (directly) on the protrusion portion.

The elastic member may be welding coupled with the insulating frame.

The gasket and the protrusion portion may be integrally formed with each other.

An area of the plug may be larger than an area of the gasket.

These and other aspects and features of the present disclosure will be described in or will be apparent from the following description of embodiments of the present disclosure.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of skill in the art by describing in detail exemplary embodiments with reference to the attached drawings, in which:
FIG. 1 illustrates an exploded perspective view illustrating a secondary battery according to some embodiments of the present disclosure;
FIG. 2 illustrates a perspective view illustrating the secondary battery according to some embodiments of the present disclosure;
FIG. 3 illustrates a perspective view illustrating the cap plate in which a vent part is disposed according to some embodiments of the present disclosure;
FIG. 4 illustrates a perspective view illustrating the cap plate according to some embodiments of the present disclosure;
FIG. 5 illustrates an enlarged perspective view illustrating a portion A of FIG. 4;
FIG. 6 illustrates a perspective view illustrating the cap assembly according to some embodiments of the present disclosure;
FIG. 7 illustrates a cross-sectional view illustrating the enlarged vent part according to some embodiment of the present disclosure;
FIG. 8 a diagram explaining a mechanism that the vent part of FIG. 7 is opened and internal gas is discharged;
FIG. 9 illustrates a cross-sectional view illustrating an enlarged vent part according to some embodiments of the present disclosure;
FIG. 10 illustrates a diagram explaining a mechanism that the vent part of FIG. 9 is opened and the internal gas is discharged; and
FIG. 11 illustrates a flowchart illustrating a manufacturing method of a secondary battery according to some embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will be understood that when a component is referred to as being "linked," "coupled," or "connected" to another component, the elements may be directly "coupled," "linked" or "connected" to each other, or another component may be "interposed" between the components".

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, dimensions and relative dimensions of layers and regions illustrated in drawings may be exaggerated for clarity of explanation. That is, the dimensions illustrated in drawings are only for convenience of understanding and are not limited thereto. Further, the same reference numerals throughout the specification designate the same elements.

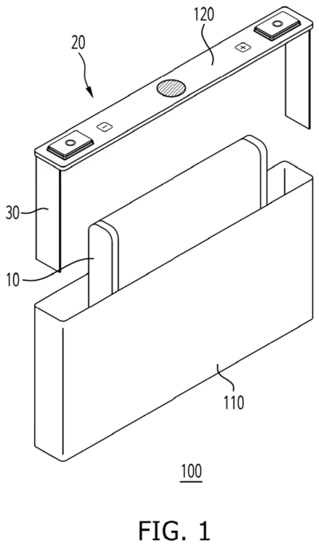

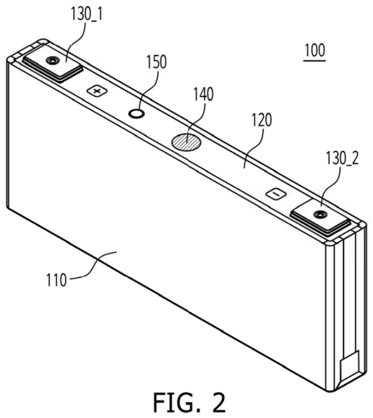

FIG. 1 is an exploded perspective view illustrating a secondary battery 100 according to some embodiments of the present disclosure. FIG. 2 is a perspective view illustrating the secondary battery 100 according to some embodiments of the present disclosure.

Referring to FIGS. 1 and 2, the secondary battery 100 includes one or more electrode assemblies 10 in which a positive electrode and a negative electrode are wound or stacked with a separator as an insulator interposed therebetween, a case 110 in which the electrode assemblies 10 are built (e.g., the case 110 accommodates the one or more electrode assemblies), and a cap assembly 20 coupled with an opened side of the case 110. The secondary battery 100 illustrated in FIGS. 1 and 2 may be a prismatic secondary battery, but the secondary battery 100 may be various types of secondary batteries.

The positive electrode and the negative electrode of the electrode assembly 10 may include a coated portion which is a region in which an active material is coated on a current collector formed of a thin metal foil, and an uncoated portion which is a region in which the active material is not coated. The positive electrode and the negative electrode may be wound with the separator interposed therebetween as an insulator. However, the electrode assembly may have a structure that the positive electrode and the negative electrode, which are configured of a plurality of sheets, are alternately stacked with the separator interposed therebetween.

The secondary battery 100 illustrated in FIGS. 1 and 2 may be a lithium secondary battery.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

In the electrode assembly 10, a positive electrode tab may be coupled to one side of a positive electrode plate, and a negative electrode tab may be coupled to one side of a negative electrode plate. The positive electrode tab and the negative electrode tab may be electrically coupled to a positive electrode terminal 130_1 and a negative electrode terminal 130_2 formed in a cap plate 120.

The case 110 may form an overall outer appearance of the secondary battery 100. The case 110 may be formed of a conductive metal such as aluminum, aluminum alloy or nickel-plated steel. The case 110 may provide a space in which the electrode assembly 10 is accommodated. According to some embodiments, the case 110 may be a prismatic case, and the secondary battery 100 may be a prismatic secondary battery. However, the secondary battery 100 may be any type of secondary battery such as a prismatic secondary battery, a cylindrical type secondary battery, or a pouch type secondary battery.

The case 110 may include long sidewall portions facing each other and short sidewall portion facing each other (e.g., long and short being relative to each other). The long sidewall portions may include a first long sidewall portion and a second long sidewall portion. The first long sidewall portion and the second long sidewall portion may face each other. The first long sidewall portion and the second long sidewall portion may be spaced apart to face each other (e.g., spaced apart by the short sidewall portions). The short sidewall portions may include a first short sidewall portion and a second short sidewall portion. The first short sidewall portion and the second short sidewall portion may be spaced apart to face each other. An area of each of the first short sidewall portion and the second short sidewall portion may be smaller than an area of each of the first long sidewall portion and the second long sidewall portion.

The cap assembly 20 may include the cap plate 120 coupled with the case 110 and the current collector 30. The cap plate 120 may be coupled with the one open side of the case 110 to seal the case 110. The case 110 and the cap plate 120 may be configured of a conductive material. According to some embodiments, the one side of the case 110 is opened, and the cap plate 120 is coupled with the one open side of the case 110 to seal the case 110.

The current collector 30 may include a positive current collector and a negative current collector. The positive current collector may include aluminum, but the materials thereof may vary. The negative current collector may be selected from cupper foil, nickel foil, stainless steel foil, titanium foil, nickel foam, cupper foam, a polymer substrate coated with a conductive metal, and a combination thereof.

The positive electrode terminal 130_1 electrically coupled to the positive electrode and the negative electrode terminal 130_2 electrically coupled to the negative electrode may be coupled with the cap plate 120. For example, the positive and negative electrode terminals 130_1 and 130_2 may be installed to pass through the cap plate 120 and protrude outwardly.

A vent part 140 is formed in at least one side of the secondary battery 100. As illustrated in FIG. 2, the vent part 140 is disposed in a top surface of the secondary battery 100, i.e. in the cap plate 120. The vent part 140 is configured to be opened when internal pressure above a predetermined threshold pressure is generated in the secondary battery 100. The predetermined threshold pressure for preventing the explosion and overheat of the secondary battery 100 may be pressure in which the vent part 140 is opened by the internal pressure of the secondary battery 100. The vent part 140 is disposed to seal a vent hole of the cap plate 120. Detailed description for the structure of the vent part 140 will be made later.

An electrolyte injection port 150 may be formed in the cap plate 120. For example, the electrolyte injection port 150 may be a through hole formed in the cap plate 120 and may be formed to inject an electrolyte into the inside of the case 110 after the cap plate 120 is coupled with an opening of the case 110 to seal the case 110. It is illustrated in FIG. 2 that the electrolyte injection port 150 is formed in the cap plate 120, but the electrolyte injection port 150 may be sealed with a sealing member after the electrolyte is injected.

The secondary battery 100 may be a lithium battery cell, a sodium battery cell, and the like. However, the secondary battery 100 may include any battery which may repeatedly provide electricity through charge and discharge. In some embodiments, when the secondary battery 100 is a lithium secondary battery, the secondary battery 100 may have the excellent life characteristics and high-rate characteristics, and thus the secondary battery 100 may be used in an electric vehicle (EV). Further, the secondary battery 100 may be used in a hybrid vehicle, for example, a plug-in hybrid electric vehicle (PHEV) and the like. The secondary battery 100 may be used in a field which requires a large amount of power storage. For example, the lithium secondary battery may be used in an electrical bicycle, power tool, and the like.

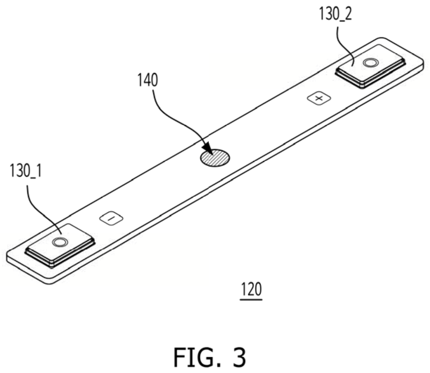

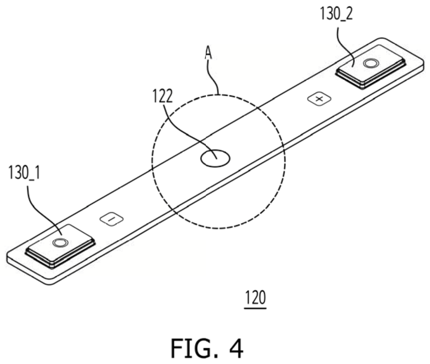

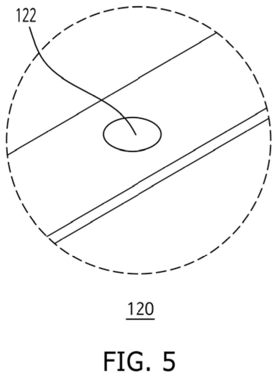

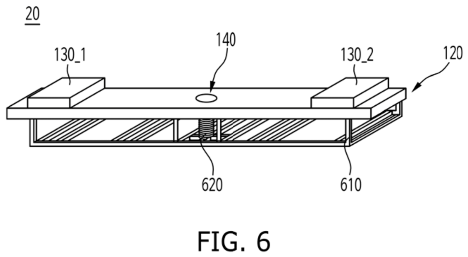

FIG. 3 is a perspective view illustrating the cap plate 120 in which the vent part 140 is disposed according to some embodiments of the present disclosure. FIG. 4 is a perspective view illustrating the cap plate 120 according to some embodiments of the present disclosure. FIG. 5 is an enlarged perspective view illustrating a portion A of FIG. 4. FIG. 6 is a perspective view illustrating the cap assembly 20 according to some embodiments of the present disclosure.

Referring to FIGS. 3 to 5, a vent hole 122 configured to discharge the internal pressure of the secondary battery 100 is formed in the cap plate 120.

The vent part 140 may be disposed in an upper surface of the cap plate 120 which surrounds the vent hole 122 of the cap plate 120. The vent part 140 may be disposed to seal the vent hole 122 of the cap plate 120 and a periphery of the vent hole 122. A center of the vent part 140 may correspond to a center of the vent hole 122 of the cap plate 120. The vent part 140 and the vent hole 122 may have a circular shape. Accordingly, the internal pressure of the secondary battery 100 may be concentrated on the center of the vent part 140.

The secondary battery including the cap plate 120 having the above-described configuration may open or close the vent part 140, which is attached to the vent hole 122 formed on the cap plate 120, by the internal pressure of the corresponding secondary battery, thereby preventing the secondary battery from being exploded and ignited.

The vent hole 122 of the cap plate 120 may be formed in the central portion of the cap plate 120. The central portion of the cap plate 120 may be positioned in the centers of a length and a width of the cap plate 120. Accordingly, the internal pressure of the secondary battery 100 may be concentrated on the vent hole 122 of the cap plate 120.

In some embodiments, the shape of the vent hole 122 may be set to have a symmetrical structure so as to discharge the internal pressure of the secondary battery 100 uniformly. The shape of the vent hole 122 may be symmetrical with respect to a length direction of the cap plate 120 and may be symmetrical with respect to a width direction of the cap plate 120. For example, the vent hole 122 may have any one of a circular shape, an elliptical shape, and a prismatic shape. However, the shape and area of the vent hole 122 may have various shapes and areas.

Referring to FIG. 6, the cap assembly 20 may include the cap plate 120 and the positive electrode terminal 130_1 and the negative electrode terminal 130_2 coupled with the cap plate 120. The cap assembly 20 includes an insulating frame 610 which is coupled with the cap plate 120 and is disposed between the cap plate 120 and an electrode assembly (for example, the electrode assembly 10 of FIG. 1). The cap assembly 20 includes the vent part 140 which is coupled with the insulating frame 610 and is disposed to seal a vent hole (for example, the vent hole 122 of FIG. 5).

The insulating frame 610 is disposed between the cap plate 120 and the electrode assembly (for example, the electrode assembly 10 of FIG. 1) to prevent the secondary battery (for example, the secondary battery 100 of FIG. 1) from being short-circuited. The insulating frame 610 may include or may be formed of a corrosion-resistant material. For example, the corrosion-resistant material may include or may be formed of at least one of aluminum (Al), aluminum alloy, and stainless use steel (SUS). However, the insulating frame 610 may include any material having corrosion resistance.

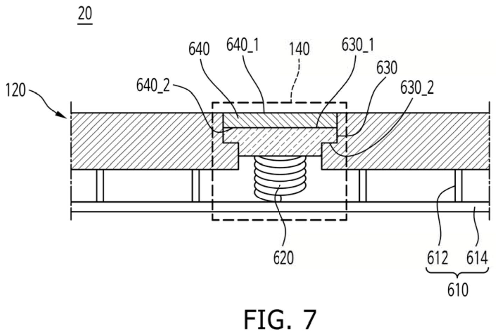

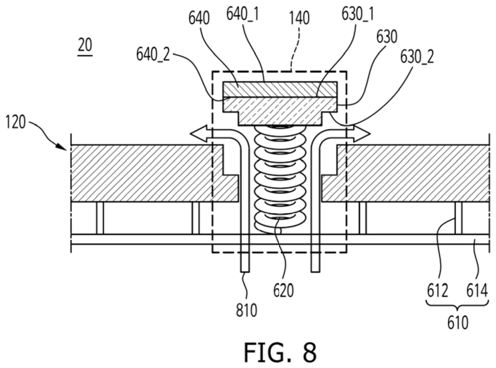

FIG. 7 is a cross-sectional view illustrating the enlarged vent part 140 according to some embodiments of the present disclosure. FIG. 8 is a diagram explaining how the vent part 140 of FIG. 7 is opened and internal gas 810 is discharged.

Referring to FIG. 7, the cap assembly 20 may include the vent part 140. The vent part 140 may be disposed to seal the vent hole (for example, the vent hole 122 of FIG. 4) of the secondary battery. The vent part 140 includes an elastic member 620 (directly) coupled with the insulating frame 610, a gasket 630 (directly) coupled with the elastic member 620, and a plug 640 disposed on the gasket 630.

In some embodiments, the insulating frame 610 may allow the cap plate 120 to be spaced from the electrode assembly 10. The insulating frame 610 may include at least one leg portion 612 which extends in a direction perpendicular to the length direction of the cap plate 120 and is coupled with the cap plate 120. The at least one leg portion 612 may be coupled with a joining portion 614 which extends in the length direction of the cap plate 120. The joining portion 614 and the at least one leg portion 612 may be formed integrally.

The elastic member 620 is coupled with the insulating frame 610. For example, one side of the elastic member 620 may be coupled with the joining portion 614 of the insulating frame 610. In this example, the elastic member 620 may be welding-coupled with the insulating frame 610. The elastic member 620 may be an elastic body having a constant elastic coefficient. The elastic member 620 may be stretched or contracted based on pressure. The "pressure" may mean the internal pressure of the secondary battery (for example, the secondary battery 100 of FIG. 1). The elastic coefficient of the elastic member 620 may be determined based on a size of the secondary battery. For example, when the size of the secondary battery is large, the elastic coefficient of the elastic member 620 may be larger. However, the elastic coefficient of the elastic member 620 may be determined based on a structure, a material, a property, and the like of the secondary battery. Accordingly, the vent part 140 which is optimized according to the size of the secondary battery may be implanted. For example, the elastic member 620 may be a spring coil. The elastic member 620 may include a corrosion-resistant material. For example, the corrosion-resistant material may include or may be formed of at least one of aluminum (Al), aluminum alloy, and stainless use steel (SUS). However, the elastic member 620 may include any material having corrosion resistance.

The gasket 630 is coupled with the other side of the elastic member 620 to seal the secondary battery (for example, the secondary battery 100 of FIG. 1). For example, the gasket 630 may seal the vent hole (for example, the vent hole 122 of FIG. 4) of the secondary battery. A shape of the gasket 630 may correspond to a shape of the vent hole. For example, the gasket 630 may have a circular shape. However, the gasket 630 may have various shapes corresponding to the shape of the vent hole. The gasket 630 may include a first surface 630_1 which is in contact with the plug 640 and a second surface 630_2 which is in contact with the elastic member 620. An area of the first surface 630_1 may be larger than that of the second surface 630_2. The cap plate 120 may be formed to have a structure corresponding to the structure of the gasket 630. For example, a portion of the vent hole (for example, the vent hole 122 of FIG. 4), which is formed in the cap plate 120 and the gasket 630 is disposed therein, may be formed to be stepped in a stepwise structure. The gasket 630 may include a material having elastic force, for example, the gasket may be formed of an elastomer. For example, the material having the elastic force or the elastomer may include at least one of silicon and silicon rubber.

The plug 640 may be coupled with the gasket 630 to (additionally) seal the secondary battery (for example, the secondary battery 100 of FIG. 1). For example, a second surface 640_2 of the plug 640 and the first surface 630_1 of the gasket 630 may be coupled with each other. The plug 640 may seal - besides the gasket 630 - the vent hole (for example, the vent hole 122 of FIG. 4) of the secondary battery. A shape of the plug 640 may correspond to the shape of the vent hole. For example, the plug 640 may have a circular shape. However, the present disclosure is not limited thereto, and the plug 640 may have various shapes corresponding to the shape of the vent hole. The plug 640 may include a corrosion-resistant material. For example, the corrosion-resistant material may include or be formed of at least one of aluminum (Al), aluminum alloy, and stainless use steel (SUS). However, the plug 640 may include any material having corrosion resistance. The plug 640 may perform a function of sealing the secondary battery together with the gasket 630.

As described above, the elastic member 620 is coupled with the insulating frame 610, the gasket 630 is coupled with the elastic member 620, and the plug 640 may be coupled with the gasket 630. The elastic member 620 may be stretched or contracted based on the internal pressure of the secondary battery (for example, the secondary battery 100 of FIG. 1). The gasket 630 and the plug 640 may seal the vent hole (for example, the vent hole 122 of FIG. 4) of the secondary battery. Further, when the elastic member 620 is stretched, the gasket 630 and the plug 640 may move in a direction perpendicular to the cap plate 120 to open the vent hole (the vent hole 122 of FIG. 4) of the secondary battery.

Referring to FIG. 8, when the internal pressure of the secondary battery (for example, the secondary battery 100 of FIG. 1) exceeds a predetermined value, the elastic member 620 may be stretched by the pressure. As the elastic member 620 is stretched, the gasket 630 and the plug 640 move to a direction perpendicular to a top surface of the cap plate 120. Accordingly, the gasket 630 and the plug 640 move upwardly, and the vent hole (for example, the vent hole 122 of FIG. 4) of the cap plate 120, which is sealed with the gasket 630 and the plug 640, will be opened. As the vent hole is opened, the internal gas 810 of the secondary battery may be discharged. When the internal gas 810 is discharged and the pressure of the inside of the secondary battery is reduced to be equal to or less than the predetermined value, the elastic member 620 will be contracted again, and the gasket 630 and the plug 640 move to seal the vent hole (for example, the vent hole 122 of FIG, 4) of the cap plate 120. Accordingly, the vent part 140 has a structure that facilitates discharge of the internal gas 810. Further, the vent part 140 is designed to be opened and closed based on the internal pressure of the secondary battery, and thus the explosion and ignition risks of the secondary battery may be prevented. Further, the vent part 140 may be reused, and thus the lifetime of the secondary battery may be extended.

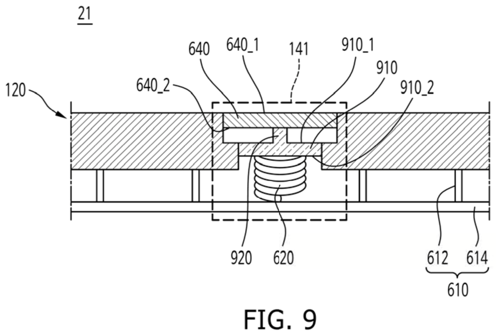

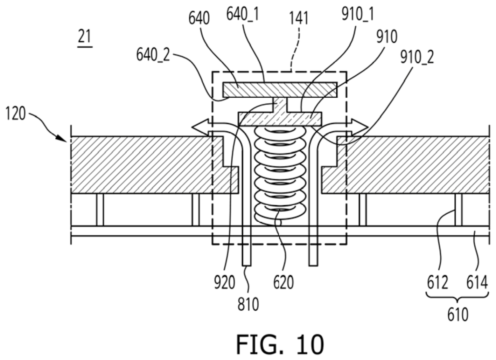

FIG. 9 is a cross-sectional view illustrating an enlarged vent part 141 according to some embodiments of the present disclosure. FIG. 10 is a diagram explaining a mechanism that the vent part 141 of FIG. 9 is opened and the internal gas 810 is discharged.

Referring to FIG. 9, a cap assembly 21 may include the vent part 141. The vent part 141 may be disposed to seal a vent hole (for example, the vent hole 122 of FIG. 4) of a secondary battery. The vent part 141 may include an elastic member 620 coupled with an insulating frame 610, a gasket 910 coupled with the elastic member 620, a protrusion portion 920 formed on the gasket 910 to protrude, and a plug 640 disposed on the protrusion portion 920. Hereinafter, description for configurations which overlap the configurations of FIGS. 7 and 8 will be omitted.

The gasket 910 may be coupled with the elastic member 620 to seal the secondary battery (for example, the secondary battery 100 of FIG. 1). For example, a second surface 910_2 of the gasket 910 may be coupled with the elastic member 620. The gasket 910 may seal the vent hole (for example, the vent hole 122 of FIG. 4) of the secondary battery. A shape of the gasket 910 may correspond to a shape of the vent hole. For example, the gasket 910 may be a circular shape. However, the present disclosure is not limited thereto, and the gasket 910 may have various shapes corresponding to the shape of the vent hole. The gasket 910 may include a material having elastic force. For example, the material having the elastic force may include at least one of silicon and silicon rubber (e.g., silicone rubber).

The protrusion portion 920 may be formed on the gasket 910 to protrude, and may be coupled with the plug 640. For example, the protrusion portion 920 may be formed on a first surface 910_1 of the gasket 910 to protrude. An empty space between the gasket 910 and the plug 640 may be formed by the protrusion portion 920. An area of the protrusion portion 920 may be smaller than that of the gasket 910. The protrusion portion 920 may be formed integrally with the gasket 910 (e.g., a monolithic structure of the protrusion portion 920 and the gasket 910).

The plug 640 may be coupled with the protrusion portion 920 to seal the secondary battery (for example the secondary battery 100 of FIG. 1). For example, a second surface 640_2 of the plug 640 and the protrusion portion 920 may be coupled with each other. The plug 640 may seal the vent hole (for example, the vent hole 122 of FIG. 4) of the secondary battery. An area of the plug 640 may be larger than that of the gasket 910. The shape of the plug 640 may correspond to the shape of the vent hole. For example, the plug 640 may have a circular shape. However, the plug 640 may have various shapes corresponding to the shape of the vent hole. The plug 640 may include a corrosion-resistant material. For example, the corrosion-resistant material may include at least one of aluminum (Al), aluminum alloy, and stainless use steel (SUS). However, the plug 640 may include any material having corrosion resistance. The plug 640 may perform a function of sealing the secondary battery together with the protrusion portion 920 and the gasket 910.

As described above, the gasket 910 may be coupled with the elastic member 620, the protrusion portion 920 may be formed on the gasket 910, and the protrusion portion 920 and the plug 640 may be coupled with each other. The elastic member 620 may be stretched or contracted based on the internal pressure of the secondary battery (for example, the secondary battery 100 of FIG. 1). The gasket 910, the protrusion portion 920, and the plug 640 may seal the vent hole (for example, the vent hole 122 of FIG. 4) of the secondary battery.

Referring to FIG. 10, when the internal pressure of the secondary battery (for example, the secondary battery 100 of FIG. 1) exceeds the predetermined value, the elastic member 620 is stretched by the internal pressure. As the elastic member 620 is stretched, the gasket 910, the protrusion portion 920, and plug 640 may move to a direction perpendicular to a top surface of a cap plate 120. Accordingly, the vent hole (for example, the vent hole (122) of FIG, 4) of the cap plate 120, which is sealed by the gasket 910, the protrusion portion 920, and the plug 640, may be opened. As the vent hole is opened, the internal gas 810 of the secondary battery may be discharged. When the internal gas 810 is discharged and the pressure of the inside of the secondary battery is reduced to be equal to or less than the predetermined value, the elastic member 620 may be contracted again, and the gasket 910, the protrusion portion 920, and the plug 640 may seal the vent hole (for example, the vent hole 122 of FIG, 4) of the cap plate 120. Accordingly, the vent part 141 may have a structure that facilitates discharge of the internal gas 810. In the present embodiments, an empty space may be formed between the gasket 910 and the plug 640. Accordingly, a distance that the gasket 910 and the plug 640 have to move to open the vent hole (for example, the vent hole 122 of FIG. 4) of the secondary battery may be reduced, and thus the internal gas 810 may be efficiently discharged.

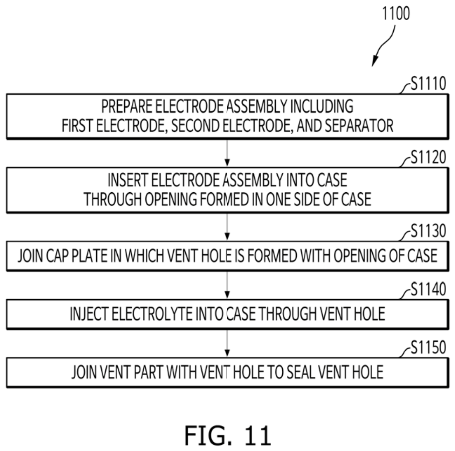

FIG. 11 is a flowchart illustrating a manufacturing method 1100 of a secondary battery according to some embodiments of the present disclosure.

Referring to FIG. 11, the manufacturing method 1100 of a secondary battery may start to prepare an electrode assembly including a first electrode, a second electrode, and a separator (S1110). Next, the electrode assembly may be inserted in a case through an opening which is formed in one side of the case (S1120).

For example, referring to FIGS. 1 and 2, the case 110 may be a prismatic case. The cap plate 120 may be coupled with the opening of the case 110 to seal the case 110. The case 110 and the cap plate 120 may be configured of a conductive material.

Further, the cap plate in which the vent hole is formed may be coupled with the opening of the case (S1130). For example, referring to FIG. 4, the vent hole 122 may be formed in the central portion of the cap plate 120. In some embodiments, the vent hole 122 may have a circular shape. In some embodiments, an area of the vent hole 122 may be smaller than that of the cap plate 120. For example, in the length direction of the cap plate 120, a length of the vent hole 122 may be smaller than a distance between the electrode terminals 130_1 and 130_2 of the cap plate 120. In the width direction of the cap plate 120, a length of the vent hole 122 may be smaller than a width of the cap plate 120.

Next, an electrolyte may be injected into the case through the vent hole (S1140). Referring to FIG. 2, the electrolyte injection port 150 may be formed on the cap plate 120, and the electrolyte may be injected into the case 110 through the electrolyte injection port 150.

Finally, a vent part may be coupled with the vent hole to seal the vent hole (S1150).

For example, referring to FIG. 7, the vent part 140 may be disposed to seal the vent hole (for example, the vent hole 122 of FIG. 4) of the secondary battery. The vent part 140 may include the elastic member 620 coupled with the insulating frame 610, the gasket 630 coupled with the elastic member 620, and the plug 640 disposed on the gasket 630.

The insulating frame 610 may extend in the direction perpendicular to the length direction of the cap plate 120, and include the at least one leg portion 612 coupled with the cap plate 120. The at least one leg portion 612 may be coupled with the joining portion 614 which extends in the length direction of the cap plate 120. The joining portion 614 and the at least one leg portion 612 may be formed integrally.

The elastic member 620 is coupled with the insulating frame 610. For example, the elastic member 620 may be coupled with the joining portion 614 of the insulating frame 610. In this example, the elastic member 620 may be welding-coupled with the insulating frame 610. The elastic member 620 may be an elastic body having a constant elastic coefficient. The elastic member 620 may be stretched or contracted based on pressure.

The gasket 630 is coupled with the elastic member 620 to seal the secondary battery (for example, the secondary battery 100 of FIG. 1). For example, the gasket 630 may seal the vent hole (for example, the vent hole 122 of FIG, 4) of the secondary battery. The shape of the gasket 630 may correspond to the shape of the vent hole. For example, the gasket 630 may have a circular shape. However, the gasket 630 may have various shapes corresponding to the shape of the vent hole. The gasket 630 may include a material having elastic force. For example, the material having the elastic force may include at least one of silicon and silicon rubber (e.g., silicone rubber). However, the gasket 630 may include any material including elastic force.

The plug 640 may be coupled with the gasket 630 to seal the secondary battery (for example, the secondary battery of FIG. 1). For example, the second surface 640_2 of the plug 640 and the first surface 630_1 of the gasket 630 may be coupled with each other. The plug 640 may seal the vent hole (for example, the vent hole 122 of FIG. 4) of the secondary battery. The shape of the plug 640 may correspond to the shape of the vent hole. For example, the plug 640 may have a circular shape. However, the plug 640 may have various shapes corresponding to the shape of the vent hole. The plug 640 may include a corrosion resistant-material. For example, the corrosion-resistance material may include at least one of aluminum (Al), aluminum alloy, and stainless use steel (SUS). However, the plug 640 may include any material having corrosion resistance. The plug 640 may perform a function of sealing the secondary battery together with the gasket 630.

The flowchart of FIG. 11 and the detailed description thereof are merely examples of the present disclosure, and the scope of the present disclosure may be greater than the flowchart of FIG. 11 and the detailed description thereof. For example, one or more processes in the flowchart and the detailed description therefor may be added/changed/deleted, the order of one or more processes may be changed, and one or more processes may be performed simultaneously.

According to some embodiments of the present disclosure, a secondary battery including a vent part having a structure which facilitate discharge of internal gas is provided.

According to some embodiments of the present disclosure, the vent part is designed to be opened and closed based on the internal pressure of the secondary battery, and thus risks of explosion and ignition of the secondary battery may be prevented. Further, the vent part may be reused, and thus lifetime of the secondary battery may be extended.

According to some embodiments of the present disclosure, an elastic coefficient of an elastic member which opens and closes the vent part may be set based on a size of a case of the secondary battery. Accordingly, the vent part which is optimized according to the size of the secondary battery may be implemented.

## Claims

1. A secondary battery, comprising:
an electrode assembly (10);
a case (110) accommodating the electrode assembly (10), the case (110) having an open side;
a cap plate (120) coupled with the open side, the cap plate (120) having a vent hole (122);
an insulating frame (610) coupled with the cap plate (120), the insulating frame (610) being between the cap plate (120) and the electrode assembly (10); and
a vent part (140) coupled with the insulating frame (610), the vent part (140) sealing the vent hole (122), wherein the vent part (140) comprises:
an elastic member (620) coupled with the insulating frame (610); and
a gasket (630) coupled with the elastic member (620).

2. The secondary battery as claimed in claim 1, wherein the vent part (140) further comprises a plug (640) disposed on the gasket (630).

3. The secondary battery as claimed in claim 1 or 2, wherein the elastic member (620) is a spring coil.

4. The secondary battery as claimed in any one of the preceding claims, wherein the elastic member (620) is coupled to the insulating frame (610) by welding.

5. The secondary battery as claimed in claim 2, wherein the gasket (630) comprises:
a first surface in contact with the plug (640); and
a second surface in contact with the elastic member (620),
wherein an area of the first surface is larger than an area of the second surface.

6. The secondary battery as claimed in any one of the preceding claims, wherein the elastic member (620) and/or the plug (640) are formed of a corrosion-resistant material.

7. The secondary battery as claimed in claim 6, wherein the corrosion-resistant material is at least one of aluminum, an aluminum alloy, and stainless steel.

8. The secondary battery as claimed in any one of the preceding claims, wherein the gasket (630) is formed of an elastomer.

9. The secondary battery as claimed in claim 8, wherein the elastomer is a silicon rubber.

10. The secondary battery as claimed in any one of the preceding claims, wherein the vent hole (122) has a circular shape.

11. The secondary battery as claimed in any one of the preceding claims, wherein the vent part (140) includes:
a protrusion portion (920) protruding on the gasket (910); and
a plug (640) disposed on the protrusion portion (920).

12. The secondary battery as claimed in claim 11, wherein the gasket (910) and the protrusion portion (920) are integrally formed with each other.

13. The secondary battery as claimed in claim 11 or 12, wherein an area of the plug (640) is larger than an area of the gasket (910).
